# EUROPEAN PATENT APPLICATION

(11) **EP 1 265 450 A2**
(43) Date of publication of application: **11.12.2002**
(21) Application number: 02077329.7
(22) Date of filing: 04.06.2002
(51) Int. Cl.: H04Q 9/00

(54) **System for reading utility meters**

(30) Priority: 04.06.2001 US 874072
(71) Applicant: Schlumberger Resource Management Services, Inc., Norcross, GA 30092 (US)
(72) Inventor: Lang, Trung Han, San Jose, California 95129 (US)
(74) Representative: Dupont, Henri

(57) **Abstract**

An automatic meter reading system for use by a utility company, a meter reading and/or billing service provider, or other entity that reads meters to collect data which is measured and recorded by meters during the consumption of one or more commodities by their consumers. According to the preferred embodiments, the automatic meter reading system includes a data collection system, a communication network, a plurality of local communication interfaces, and a plurality of meters which are, otherwise, operable with a mobile meter reading system. The data collection system controls overall operation of the automatic meter reading system. The plurality of local communication interfaces and plurality of meters are configured into a plurality of cells, with each cell representing a local collection zone from which the collection of meter data associated with the consumption of one or more commodities is desired by an operator of the automatic meter reading system.

## Description

### FIELD OF THE INVENTION

This invention relates generally to the field of automatic meter reading systems, and in its preferred embodiments, to the automatic collection of consumption and related data from utility meters using wired and wireless data communication techniques.

### BACKGROUND OF THE INVENTION

In general, most residences and businesses consume at least one commodity provided by a utility company or other supplier, including electricity, natural gas, and water. In order for the utility company or other supplier to charge its residential and business customers for the provision of such commodities, meters of various types, forms and sophistication are employed to measure and record certain parameters related to the consumption of the commodities by such customers. The measured and recorded parameters are then utilized by the utility company, in accordance with a rate structure mutually agreed upon by the utility company and customer in advance, to compute the dollar amount that the customer is charged for consumption of the commodities. The particular parameters which are measured and recorded (and, hence, the degree of sophistication of the meter) are, typically, determined by the rate structure. For instance, the rate structure used for a residential electric utility customer may specify that the amount charged for the electricity is based solely on the number of kilowatt-hours of electricity consumed at the customer's residence during a month and, hence, the meter need only measure and record that number of kilowatt-hours. Alternatively, a business or commercial electric utility customer may be charged for electricity in accordance with one or more rate structures that may be based upon a number of parameters, including, for example, consumption, peak demand, and load on, perhaps, an hourly basis. As a consequence, the business or commercial electric utility customer may have more than one meter and may have more sophisticated meters than a residential customer.

Regardless of the number and type of meters employed for residential and business customers, a utility company must read, or collect, data representative of the measured and recorded parameters from each meter (such data being also referred to herein as "meter data"). In the past and, perhaps, today in some areas, the data was collected "manually" from many meters by utility company employees, known as "meter readers", who physically traveled to the site of a meter, read dials on the meter indicating the values of parameters such as consumption, and wrote down the values of the parameters on paper (or entered them into a handheld data collection device). Then, the data was returned to a utility company office where it was used to calculate a charge and create a bill for the commodity consumed by the customer. While such manual meter reading accomplished the task at hand, it nonetheless, became increasingly costly over time as it required the sending of a meter reader to the site of each meter in order to collect necessary data. Manual meter reading was also prone to errors caused, for instance, by the misreading of a dial, by the improper recordation of a reading on paper or on a handheld data collection device, or by the failure to correctly input a handwritten reading into a computer.

To reduce costs and resolve some of the difficulties inherent in manual meter reading, a number of meter manufacturers developed a variety of "improved" meters and handheld data collection devices that cooperatively interacted with the improved meters. For instance, some meter manufacturers developed improved meters having electronic memories which stored meter data and having probe receptacles which received a probe of a handheld data collection device. Working cooperatively, the probe and probe receptacle enabled the communication of the meter data from the meter to the handheld data collection device. Then, meter manufacturers developed improved meters and handheld data collection devices having optical data communication interfaces in lieu of probes and probe receptacles. Such improved meters and handheld data collection devices significantly reduced the likelihood of human error in the data collection process and made meter data collection faster, but failed to resolve difficulties related to personnel costs and more frequent meter reading requirements for real time pricing and load analysis.

In a continued effort to reduce personnel costs and further improve meter reading capabilities, manufacturers developed improved meters having radio frequency transmitters capable of transmitting meter data up to a range, or distance, of approximately 2,000 feet. Manufacturers also developed new mobile (including, handheld and drive-by) meter reading systems and fixed network meter reading systems to read meter data from the radio transmitter-equipped meters and to, thereby, take advantage of the ability to collect meter data from a distance without having to send a meter reader to the site of each meter. Using a handheld mobile data collection device, a meter reader walking within the transmission range of a radio transmitter-equipped meter while carrying an operating handheld mobile data collection device could initiate the transmission of meter data from the meter and then collect the meter data for subsequent communication to a computer system for further processing. Using a vehicle specially-equipped with equipment similar to that of the handheld mobile data collection device, a meter reader could drive the vehicle relatively close to and within the transmission range of radio transmitter-equipped meters (hence, the term "drive-by meter reading system" is used to describe such systems) and perform similar meter data collection and communication tasks as with the handheld mobile data collection device, but do so much more rapidly. While the radio transmitter-equipped meters and mobile data collection devices did not eliminate the need for meter readers and did not make frequent (i.e., hourly) meter reading possible, they did reduce the number of meter readers required as each meter reader, using a handheld mobile data collection device or a specially-equipped vehicle, could collect meter data from a greater number of meters than before possible because the meter readers no longer had to physically be present at the specific site of each meter in order to collect meter data from each meter.

Alternatively, use of the fixed network meter reading systems reduced the number of meter readers and enabled frequent meter reading. In a fixed network meter reading system, a first plurality of data concentrators and/or repeaters are strategically positioned at fixed locations on utility poles, on buildings, or on other structures and are aimed at the radio transmitter-equipped meters. A second plurality of data concentrators and/or repeaters are similarly strategically positioned at fixed locations, but are aimed at the data concentrators and/or repeaters of the first plurality of data concentrators and/or repeaters or are aimed at one another to form a network in which meter data collected from a radio transmitter-equipped meter by a data concentrator of the first plurality of data concentrators and/or repeaters is then forwarded, via the second plurality of data concentrators and/or repeaters, to a data collection system. Because the data concentrators and/or repeaters of the fixed network meter reading systems were fixedly positioned on utility poles, on buildings, or on other structures and because proper aiming of the data concentrators and/or repeaters was necessary for their operation, the installation and maintenance of fixed network meter reading systems was costly.

Further, the radio transmitter-equipped meters which measured electricity consumption and related parameters extracted power for their transmitters from the respective electric supply lines for which they measured and collected data. Therefore, such radio transmitter-equipped meters could transmit over transmission ranges of up to 2,000 feet without concern for a supply of power and, hence, operated satisfactorily with either mobile or fixed network meter reading systems. However, the radio transmitter-equipped meters which measured and collected data pertaining to natural gas or water consumption, generally, utilized batteries to power their transmitters since no source of electrical energy was readily available. Because the meters and their batteries were exposed to the weather and because the ability of the batteries to deliver an appropriate supply of power for a commercially-practicable lifetime was adversely effected by such exposure, manufacturers attempted to increase battery life by reducing the transmission power output and, hence, the transmission range of the transmitters of such meters. As a consequence, such radio transmitter-equipped meters operated satisfactorily with mobile meter reading systems where the mobile data collection devices of such systems were, generally, closer to the radio transmitter-equipped meters than the data concentrators and/or repeaters of a fixed network meter reading system. Hence, the commercial viability of using radio transmitter-equipped meters in fixed network meter reading systems for natural gas and water has been adversely effected by this inherent limitation of batteries.

Therefore, there is a need in the industry for an automatic meter reading system that enables the automatic reading of meter data from electric, natural gas and water meters which addresses these and other related, and unrelated, shortcomings.

### SUMMARY OF THE INVENTION

Briefly described, the present invention comprises an automatic meter reading system, including apparatus and methods, for use by a utility company, a meter reading and/or billing service provider, or other entity that reads meters to collect data which is measured and recorded by meters during the consumption of one or more commodities by their consumers. More particularly, the present invention comprises an automatic meter reading system including a fixed network and a plurality of local communication interfaces which enable the collection of data measured and recorded by a plurality of meters which are, otherwise, operable with a mobile meter reading system. The plurality of local communication interfaces and plurality of meters are configured into a plurality of cells, with each cell (also referred to herein as a "nanocell") representing a local collection zone from which the collection of meter data associated with the consumption of one or more commodities is desired by an operator of the automatic meter reading system.

In accordance with the preferred embodiment of the apparatus of the present invention, the automatic meter reading system includes a data collection system, one or more fixed communication networks, a plurality of local communication interfaces, and a plurality of meters. The data collection system, preferably, includes one or more computer system(s) with appropriate computer hardware and software to perform control and management tasks that govern the overall operation of the automatic meter reading system. One or more fixed communication networks communicatively connect to the data collection system to enable the communication of instructions and data therebetween. Preferably, the fixed communication networks include, for example and not limitation, a fixed automatic meter reading system network, the public switched telephone network, and a cable television network. By utilizing such existing, already in place, fixed communication networks, the set-up and operational costs associated with the automatic meter reading system should be minimized when compared to similar costs for the set-up and operation of an entirely new communication network.

As previously noted, the plurality of local communication interfaces and the plurality of meters are configured into a plurality of nanocells. Each nanocell includes one local communication interface which communicatively connects to a fixed communication network to enable the bi-directional communication of instructions and data between the data collection system and the local communication interface. Preferably, the local communication interface of a nanocell comprises a transceiver. Each nanocell also includes one or more meters, located at respective endpoint sites, which measure and record data related to the consumption of one or more respective commodities by one or more respective consumers at the respective endpoint sites. Each meter communicatively connects to the nanocell's local communication interface to allow the communication of instructions and data therebetween (i.e., each meter within the nanocell communicates, or transmits, its commodity consumption related data to the nanocell's local communication interface - which may be built into a particular meter of the nanocell, plugged into a particular meter of the nanocell, or separate from the meter(s) of the nanocell). After receiving the commodity consumption related data from the meter(s), the nanocell's local communication interface, subsequently, communicates the received commodity consumption related data, via the fixed communication network, to the data collection system.

Generally, those meters which measure and record data associated with the consumption of natural gas, water, or steam (and those meters which measure and record data associated with the consumption of electricity that do not include a built-in transceiver) are equipped with a radio transmitter powered by batteries and communicate wirelessly with their respective local communication interface. Because such meters of a nanocell are, preferably, located within a few feet of the nanocell's local communication interface, the radio transmitters of the meters need only transmit their data to the local communication interface using microwatts of electrical power. As a consequence, the battery life of the meters' batteries may be improved, thereby reducing on-going maintenance costs associated with the replacement of batteries in the meters of the system. Further, because each nanocell comprises one or more meters from which data may be collected, a nanocell may be associated, for example and not limitation, with a single family residence having meters which measure electricity, natural gas, and water consumption, or with an apartment building having closely-located meters which measure and record natural gas consumption for multiple units, or with a process line of an industrial facility having closely-located meters which measure and record water and steam consumption by the process line. Through the use of such nanocells, the automatic meter reading system provides, to the system's operator, a high-degree of flexibility in the design and structure of a meter data collection plan and, hence, allows the system's operator to offer a variety of billing methods to its customers.

According to a method of the preferred embodiment of the present invention, consumption-related data may be collected from the meters on-request or periodically at preset intervals of time under the direction and control of the data collection system. When a meter reading is desired, the data collection system generates an appropriate instruction, or series of instructions, and communicates the instructiori(s) via a fixed communication network, to the local communication interface of the nanocell of the meter from which consumption-related data is desired. Where the fixed communication network includes a fixed automatic meter reading network, such communication, generally, uses wireless communication components and techniques between the fixed communication network and the local communication interface. Where the fixed communication network includes the public switched telephone network or a cable television network, such communication, generally, uses wired communication components and techniques between the fixed communication network and the local communication interface. Upon receipt of such an instruction from the data collection system, the local communication interface communicates a wake-up instruction to the meter from which data is to be collected (i.e., the meters employed in the automatic meter reading system are, preferably, "intelligent" meters that enter a low power consuming, hibernation mode of operation during periods of time when no communication is on-going with the meters' local communication interface). The meter responds by awakening from hibernation and by communicating the desired consumption-related data to the local communication interface which, subsequently, communicates the consumption-related data to the data collection system through the fixed communication network.

Accordingly, it is an object of the present invention to present information to enable the use of radio frequency transmitter-equipped meters designed for use with a mobile meter reading system in conjunction with a fixed network meter reading system.

Another object of the present invention is to eliminate the need for the costly replacement of meters formerly utilized with mobile meter reading systems when such mobile meter reading systems are replaced by fixed network meter reading systems.

Still another object of the present invention is to enable the use of radio frequency transmitter-equipped meters powered by batteries in a fixed network meter reading system without having to frequently replace the batteries.

Still another object of the present invention is to use radio frequency transmitter-equipped meters in conjunction with a fixed network meter reading system without having to locate, mount, and aim data collection devices to read the meters.

Still another object of the present invention is to utilize existing fixed telecommunications infrastructure in conjunction with radio frequency transmitter-equipped meters.

Still another object of the present invention is to reduce transmission range shortcomings between radio frequency transmitter-equipped meters and data collection devices of a fixed network meter reading system.

Still another object of the present invention is to enable the on-request reading of meters.

Still another object of the present invention is to enable the periodic reading of meters.

Still another object of the present invention is to provide interval data and real-time alarms.

Still another object of the present invention is to provide the meter reading capabilities required for real-time pricing of commodities.

Still another object of the present invention is to reduce the number of persons required to read meters.

Still another object of the present invention is to reduce the amount of time required to read meters.

Other objects, features, and advantages of the present invention will become apparent upon reading and understanding the present specification when taken in conjunction with the appended drawings.

### BRIEF DESCRIPTION OF THE DRAWINGS

Fig. 1 is a block diagram representation of an automatic meter reading system in accordance with a preferred embodiment of the present invention.
Fig. 2 is a block diagram representation of a local communication interface of the automatic meter reading system of Fig. 1.
Fig. 3 is a block diagram representation of a particular configuration of a portion of the automatic meter reading system of Fig. 1.
Fig. 4 is a flowchart representation of a method of operation of the automatic meter reading system of Fig. 1 in accordance with the preferred embodiment of the present invention.

### DETAILED DESCRIPTION OF THE PREFERRED EMBODIMENT

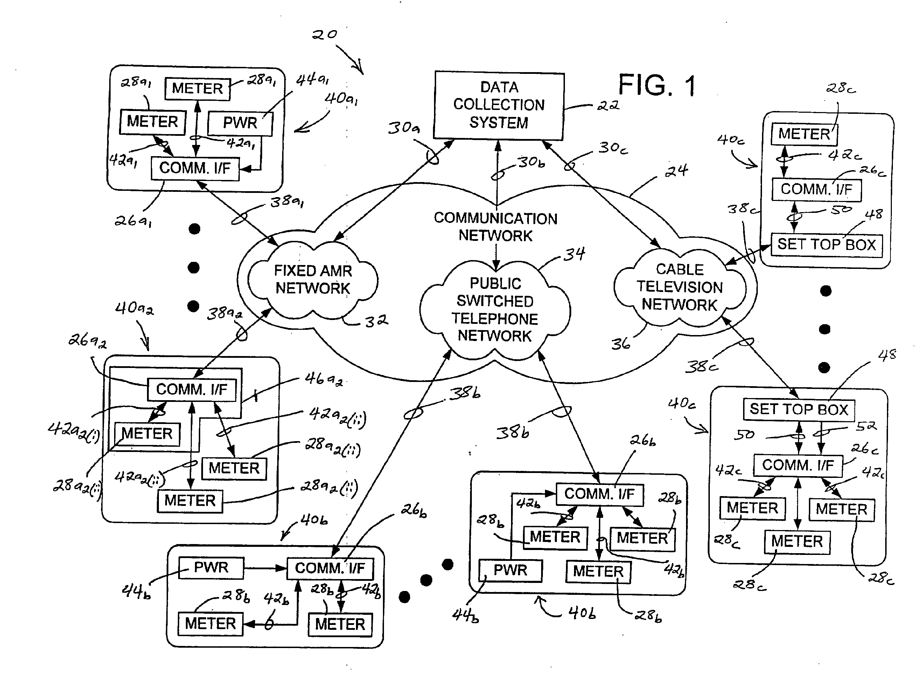

Referring now to the drawings, in which like numerals represent like components throughout the several views and an ellipsis indicates the presence of multiple similar components, an automatic meter reading system 20, in accordance with the preferred embodiment of the present invention, is depicted in Fig. 1. The automatic meter reading system 20 is, typically, utilized by a utility company, a meter reading and/or billing service provider, or other entity that reads meters (referred to herein as an "operator" of the automatic meter reading system 20) to collect data (referred to herein as "collected data" and "meter data") which is measured and recorded by meters during the consumption of one or more commodities (including, for example and not limitation, electricity, natural gas, water, and/or steam) by their consumers. With respect to a particular commodity, the collected data, preferably, includes numerical values representative of parameters such as the actual amount of the commodity consumed (i.e., consumption in units of kilowatt-hours, cubic feet, gallons, and/or pounds), the peak demand for the commodity, and the load placed on the delivery system for the commodity by the consumer of the commodity. The specific parameters for which data is collected (or, is available for collection) are defined, at least in part, by the particular types of meters which measure and record the consumption of the commodities. It is understood that the scope of the present invention includes automatic meter reading systems which collect data associated with commodities and parameters other than and in addition to those described herein. In addition to collecting meter data, the automatic meter reading system 20 calculates and/or provides on-request and periodic meter readings, interval data, peak-demand data, load data, real-time alarms, and performs other similar calculations and/or tasks related to the consumption of a commodity by a consumer.

The automatic meter reading system 20 comprises, according to the preferred embodiment, a data collection system 22, a fixed communication network 24, a plurality of local communication interfaces 26, and a plurality of meters 28. The data collection system 22 communicatively connects to the fixed communication network 24 through communication channels 30 to enable the data collection system 22 to bi-directionally communicate instructions and data, via the communication channels 30 and fixed communication network 24, to the local communication interfaces 26 of the plurality of local communication interfaces 26. Preferably, the data collection system 22 includes a computer system having data storage devices with sufficient data storage capacity and appropriate communication interfaces communicatively connected to the computer system and to communication channels 30. The computer system further includes computer software appropriate to enable the on-request or periodic (for example, hourly, daily, monthly) collection of meter data that is measured and recorded by the meters 28 of the plurality of meters 28 and communicated by respective local communication interfaces 26 of the plurality of local communication interfaces 26. It is understood that the scope of the present invention includes data collection systems 22 comprising of other data processing devices or components which perform substantially the same functions, including, for example and not limitation, data collection systems having multiple networked computer systems (or components thereof) and communication interfaces which are physically located at one or more locations.

The fixed communication network 24 includes a communications infrastructure which communicatively connects to the data collection system 22 through a plurality of communication channels 30 for the bi-directional communication of instructions and data therebetween. The fixed communication network 24 also communicatively connects, as described in more detail below, to the plurality of local communication interfaces 26 through a respective plurality of communication channels 38. Together, the fixed communication network 24 and the pluralities of communication channels 30, 38 provide a plurality of communication paths for the bi-directional communication of instructions and data between the data collection system 22 and the local communication interfaces 26. Preferably, the fixed communication network 24 includes a fixed automatic meter reading (AMR) network 32, the public switched telephone network 34, and a cable television network 36.

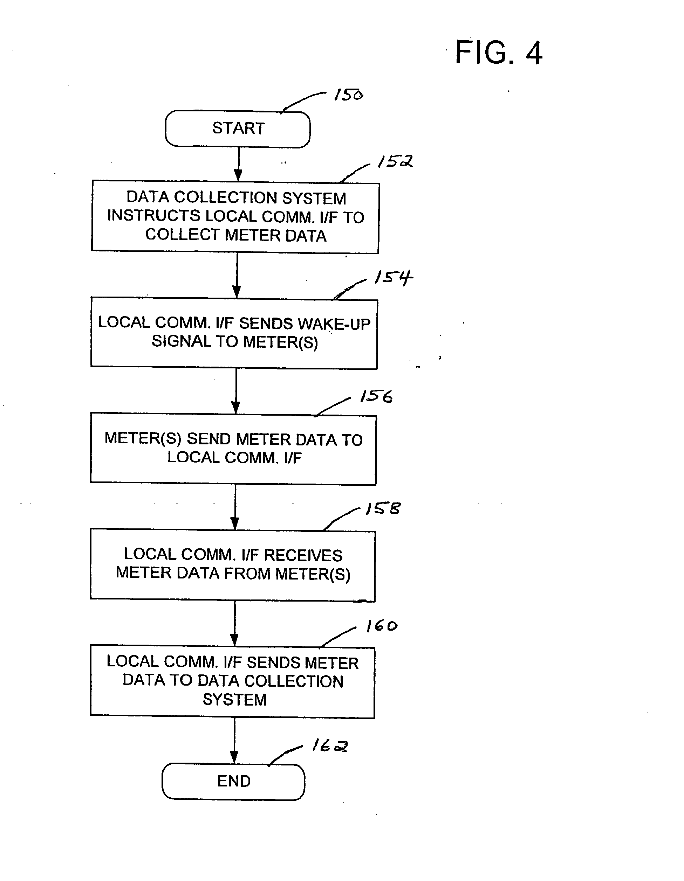

The fixed automatic meter reading network 32 connects communicatively to the data collection system 22 through communication channels 30a and includes, as illustrated in Fig. 4, a first plurality of data concentrators/repeaters 102, a second plurality of data concentrators/repeaters 104, and related and cooperative active and passive components forming a "backbone" which collects and communicates meter data using, primarily, wireless technology. Generally, such data concentrators/repeaters 102, 104 are fixedly positioned atop poles, buildings, or other fixed structures at locations which enable one or more meters in the vacinity of the data concentrators/repeaters 102, 104 (and, within the bi-directional communication range of the meters, data concentrators/ repeaters 102, 104) to receive instructions from and transmit data to the data concentrators/repeaters 102, 104. A fixed automatic meter reading network 32, acceptable in accordance with the preferred embodiment of the present invention, includes the CellNet fixed network of Schlumberger Resource Management Services, Inc. of San Carlos, California.

Public switched telephone network 34 communicatively connects to the data collection system 22 via communication channels 30b. The public switched telephone network 34, as referred to herein, comprises the worldwide voice telephone network having parts thereof operated by various communication providers and which is accessible to all those with telephones and access privileges. Preferably, the public switched telephone network 34 includes all local, long distance, wired and wireless facilities and components of the worldwide voice telephone network and all facilities and components cooperative therewith (i.e., including, for example and not limitation, cellular telecommunication system components which enable cellular voice and data communication and which might, otherwise, not strictly be considered to be part of the fixed communication network commonly referred to as the public switched telephone network).

The cable television network 36 communicatively connects to the data collection system 22 through communication channels 30c. The cable television network 36 includes, in accordance with the preferred embodiment of the present invention, the satellites, satellite uplinks and downlinks, cable headends, distribution facilities, and related and cooperative components owned and operated by various entities which provide cable television and other broadband, or non-broadband, services and capabilities to consumers.

It is understood that the scope of the present invention includes all types of fixed communication networks and communication channels which enable or allow the communication of data between the local communication interfaces 26 and the data collection system 22. Such fixed communication networks and communication channels include those particularly identified herein and additionally include, for example and not limitation, the Internet, public and private fixed data communication networks and communication channels, and fixed communication networks and channels which utilize wired or wireless, digital or analog, satellite, optical, or other technology and components.

According to the preferred embodiment of the present invention, the plurality of local communication interfaces 26 and the plurality of meters 28 of the automatic meter reading system 20 are configured logically as a plurality of cells 40 with each cell 40 representing and defining a single logical endpoint site 86 (including, for example and not limitation, a single family residence, an apartment building, an industrial or commercial facility or portion thereof) from which an operator of the automatic meter reading system 20 desires to collect meter data associated with the consumption of one or more commodities by one or more consumers. Each cell 40, preferably, includes one local communication interface 26 of the plurality of local communication interfaces 26 and one or more meters 28 of the plurality of meters 28. The local communication interface 26 of a particular cell 40 communicatively connects only with the meter(s) of and local to the same cell 40, is dedicated to reading and collecting meter data only from those meter(s) 28, and, preferably, does not read or collect meter data from the meter(s) 28 of any other cell 40. The meter(s) 28 of a cell 40, respectively, measure and record parameters pertaining to the consumption of the same or different commodities, thereby enabling the operator to collect data from, for example and not limitation, the electricity, natural gas, and water meters 28 located at a logical endpoint site 86. Thus, for example and not limitation, a particular cell 40 may include: in the context of a single family residence, individual electric, natural gas, and water meters which measure and record data associated with the residence's respective consumption of electricity, natural gas, and water; in the context of an apartment building, a plurality of electric meters which measure and record data corresponding to the electrical consumption by a respective plurality of different tenants; or, in the context of an industrial facility, a plurality of natural gas meters which measure and record data representative of the natural gas consumption of a particular process performed at the facility.

The plurality of cells 40 of the automatic meter reading system 20, as illustrated in Fig. 1, comprises a first plurality of cells 40a1 which each include a local communication interface 26a1 of the plurality of local communication interfaces 26, one or more meter(s) 28a1 of the plurality of meters 28, and a power supply 44a1. The local communication interfaces 26a1 of cells 40a1 communicatively connect to the fixed automatic meter reading network 32, via communication channels 38a1, for the bi-directional communication of instructions and data therebetween (and, hence, for the bi-directional communication of instructions and data with the data collection system 22 via the fixed automatic meter reading network 32 and communication channels 30a). Preferably, communication channels 38a1 include wireless communication channels enabling wireless communications between the local communication interfaces 26a1 and various data collectors, data concentrators and/or other components of the fixed automatic meter reading network 32. The local communication interfaces 26a1 of particular cells 40a1 also communicatively connect to respective meter(s) 28a1 of those cells 40a1 through communication channels 42a1. Preferably, communication channels 42a1 include wireless communication channels which allow the wireless communication of instructions and data between a local communication interface 26a1 of a cell 40a1 and the respective meter(s) 28a1 of that cell 40a1. It should be understood, however, that the scope of the present invention additionally includes all other types and forms of communication channels 38a1, 42a1 for the communication of information, respectively, between the local communication interfaces 26a1 and the components of the fixed automatic meter reading network 32 and between the local communication interfaces 26a1 and the meter(s) 28a1 of a cell 40a1.

Each local communication interface 26a1 of cells 40a1 receives electrical power for operation from the respective power supply 44a1 of the same cell 40a1. Preferably, power supplies 44a1 include batteries of a type capable of providing a local communication interface 26a1 with an appropriate supply of electrical power over a satisfactory period of time which enables, as described herein, a local communication interface 26a1 to communicate with the meter(s) 28a1 of its cell 40a1 and with the fixed automatic meter reading network 32. Batteries, generally acceptable in accordance with the preferred embodiment, include those batteries manufactured from lithium. It is understood that the scope of the present invention includes power supplies 44a1 of all other alternate forms, including, for example and not limitation, adapters or converters that convert alternating current electricity into direct current electricity at an appropriate voltage for use by the components of the local communication interfaces 26a1.

In accordance with the preferred embodiment of the present invention, the plurality of cells 40 also comprises a second plurality of cells 40a2 having local communication interfaces 26a2 which are integrated with respective electric meters 28a2(i) in electricity metering and communication devices 46a2. Local communication interfaces 26a2 receive electrical power for their operation from the electrical conductor(s) for which the meters 28a2(i) measure and record electrical consumption-related data. Electricity metering and communication devices 46a2, acceptable in accord with the preferred embodiment, include Centron units available from Schlumberger Resource Management Services, Inc. of West Union, South Carolina.

The local communication interfaces 26a2 of electricity metering and communication devices 46a2 and of cells 40a2 communicatively connect to the fixed automatic meter reading network 32, via communication channels 38a2, for the bi-directional communication of instructions and data therebetween (and, hence, for the bi-directional communication of instructions and data with the data collection system 22 via the automatic meter reading network 32 and communication channels 30a). Preferably, communication channels 38a2 include wireless communication channels enabling wireless communications between the local communication interfaces 26a2 and various data collectors, data concentrators and/or other components of the fixed automatic meter reading network 32. Each local communication interface 26a2 also communicatively connects to its respective integrated electric meter 28a2(i) by a respective communication channel 42a2(i) for the bi-directional communication of instructions and data therebetween. Preferably, communication channels 42a2(i) include wired communication channels internal to the respective electricity metering and communication devices 46a2. Additionally, local communication interfaces 26a2 communicatively connect to other meter(s) 28a2(ii), if any, of their respective cells 40a2 (including, for example and not limitation, electric meters not having integrated local communication interfaces, and meters for measuring and recording data related to the consumption of other commodities such as natural gas or water) via respective communication channels 42a2(ii), if any, for the bi-directional communication of instructions and data therebetween. Preferably, communication channels 42a2(ii) include wireless communication channels which allow wireless communication between the local communication interface 26a2 of a cell 40a2 and the respective other meter(s) 28a2(ii) of that cell 40a2. It should be understood, however, that the scope of the present invention additionally includes all other types and forms of communication channels 38a2, 42a2 for the communication of information, respectively, between the local communication interfaces 26a2 and the components of the fixed automatic meter reading network 32 and between the local communication interfaces 26a2 and the meter(s) 28a2 of a cell 40a2.

According to the preferred embodiment of the present invention and as illustrated in Fig. 1, the plurality of cells 40 of the automatic meter reading system 20 additionally comprises a third plurality of cells 40b which each include a local communication interface 26b of the plurality of local communication interfaces 26, one or more meter(s) 28b of the plurality of meters 28, and a power supply 44b. The local communication interfaces 26b of cells 40b communicatively connect, through communication channels 38b, to the public switched telephone network 34. Communication channels 38b enable the bi-directional communication of instructions and data between the local communication interfaces 26b and the public switched telephone network 34 and, therefore, enable the bi-directional communication of instructions and data with the data collection system 22 through the public switched telephone network 34 and communication channels 30b. Preferably, communication channels 38b include wired and/or wireless (for example, cellular) communication channels enabling wired and/or wireless communications between the local communication interfaces 26b and the public switched telephone network 34. The local communication interfaces 26b of particular cells 40b also communicatively connect to respective meter(s) 28b of cells 40b through communication channels 42b. Preferably, communication channels 42b include wireless communication channels which allow the wireless communication of instructions and data between a local communication interface 26b of a cell 40b and the respective meter(s) 28b of that cell 40b. It should be understood, however, that the scope of the present invention additionally includes all other types and forms of communication channels 38b, 42b for the communication of information, respectively, between the local communication interfaces 26b and the components of the public switched telephone network 34 and between the local communication interfaces 26b and the meter(s) 28b of a cell 40b.

Each local communication interface 26b of cells 40b connects to and receives electrical power for operation from the respective power supply 44b of the same cell 40b. Preferably, power supplies 44b include batteries of a type capable of providing a local communication interface 26b with an appropriate supply of electrical power over a satisfactory period of time which enables, as described herein, a local communication interface 26b to communicate with the meter(s) 28b of its cell 40b and with the public switched telephone network 34. Batteries, generally acceptable in accordance with the preferred embodiment, include those batteries manufactured from lithium. It is understood that the scope of the present invention includes power supplies 44b of all other alternate forms, including, for example and not limitation, adapters or converters that convert alternating current electricity into direct current electricity at an appropriate voltage for use by the components of the local communication interfaces 26b.

The plurality of cells 40 of the automatic meter reading system 20 further comprises, as displayed in Fig. 1, a fourth plurality of cells 40c which each include a local communication interface 26c of the plurality of local communication interfaces 26, one or more meter(s) 28c of the plurality of meters 28, and a set top cable television box 48 which communicatively connects to the cable television network 36 via communication channels 38c. The local communication interfaces 26c of cells 40c communicatively connect to respective set top cable television boxes 48, through respective communication channels 50 and through the receivers and/or transmitters of the set top cable television boxes 48, for the bi-directional communication of instructions and data therebetween (and, hence, for the bi-directional communication of instructions and data with the data collection system 22 via the cable television network 36 and communication channels 30c). Preferably, communication channels 38c, 50 include wired communication channels. The local communication interfaces 26c of particular cells 40c also communicatively connect to respective meter(s) 28c of those cells 40c through communication channels 42c. Preferably, communication channels 42c include wireless communication channels which allow the wireless communication of instructions and data between a local communication interface 26c of a cell 40c and the respective meter(s) 28c of that cell 40c. It should be understood, however, that the scope of the present invention additionally includes all other types and forms of communication channels 38c, 42c, 50 for the communication of information, respectively, between the set top cable television box 48 of a cell 40c and the cable television network 36, between the local communication interface 26c and the meter(s) 28c of a cell 40c, and between the set top cable television box 48 and the local communication interface 26c of a cell 40c.

The set top cable television box 48 of each cell 40c provides control of that cell's local communication interface 26c and provides, or serves as, a communication interface for the cable television network 36 through which commodity consumption related data is communicated to the data collection system 22. A set top cable television box 48, acceptable in accordance with the preferred embodiment of the present invention, includes an off-the-shelf set top cable television box available from Scientific Atlanta of Duluth, Georgia. The set top cable television box 48 of each cell 40c also electrically connects, via electrical conductor paths 52, to the local communication interface 26c of that cell 40c in order to provide an appropriate supply of electrical power for operation of the local communication interface 26c. It is understood that the scope of the present invention includes local communication interfaces 26c which receive electrical power for their operation from power supplies (not shown) of all forms, including, for example and not limitation, adapters or converters that convert alternating current electricity into direct current electricity at an appropriate voltage for use by the components of the local communication interfaces 26c.

Note that, in accordance with the preferred embodiment of the present invention, each of the meters 28 is an "intelligent" meter having a processing circuit which interprets received instructions and performs, or causes the performance of, appropriate actions in response thereto, and having a memory which stores consumption-related data measured and collected by the meter 28. Each of the meters 28 includes a transceiver (or equivalent structure) which communicatively connects to respective communication channels 42 for receiving instructions from a respective local communication interface 26 and for transmitting data to the respective local communication interface 26 in response to the receipt of such instructions. Preferably, the transceivers of meters 28a1, 28a2(ii), 28b, 28c receive instructions and transmit meter data wirelessly through respective communication channels 42a1, 42a2(ii), 42b, 42c, while the transceivers of meters 28a2(i) receive instructions and transmit meter data over wired communication channels 42a2(i) or substantially equivalent conductor paths. Each of the meters 28a1, 28a2(ii), 28b, 28c also includes a battery which provides electrical power for operation of the meter's transceiver. Preferably, the batteries are manufactured from lithium or a lithium ion. The transmission range and output power of the transmitters of the transceivers of meters 28a1, 28a2(ii), 28b, 28c are, preferably, selected to enable the transceivers of meters 28a1, 28a2(ii), 28b, 28c to transmit meter data to their respective local communication interfaces 26a1, 26a2, 26b, 26c while minimizing the amount of electrical power consumed from the batteries of the meters 26a1, 26a2(ii), 26b, 26c and to, thereby, extend the useable life of the batteries. Preferably, the transmission output power of the transmitters of the transceivers of meters 28a1, 28a2(ii), 28b, 28c is in the microwatt range. It is important to also note that the meters 28a1, 28a2(ii), 28b, 28c, preferably, have a "hibernation mode" or "sleep mode" in which the meters 28a1, 28a2(ii), 28b, 28c are dormant with respect to communications and use an absolute minimum amount of power and, thereby further extend the useable life of the batteries. Generally, the meters 28a1, 28a2(ii), 28b, 28c enter hibernation mode after the expiration of a preset period of time during which the meters 28a1, 28a2(ii), 28b, 28c do not receive instructions, transmit meter data, or have any other communication with a respective local communication interface 26a1, 26a2, 26b, 26c. The meters 28a1, 28a2(ii), 28b, 28c remain in hibernation mode until the meters 28a1, 28a2(ii), 28b, 28c receive a "wake up" instruction from a respective local communication interface 26a1, 26a2, 26b, 26c. Then, the meters 28a1, 28a2(ii), 28b, 28c exit hibernation mode and perform the activities necessary to communicate meter data. Exemplary meters 28a1, 28a2(ii), 28b, 28c include, but are not limited to: an "R300" electricity meter available from Schlumberger Resource Management Services, Inc. of West Union, South Carolina; a natural gas meter having an "ERT" available from Itron, Inc. of Spokane, Washington; and, an "R900" water meter having a "SURF MIU" available from Schlumberger Resource Management Services, Inc. of Tallassee, Alabama.

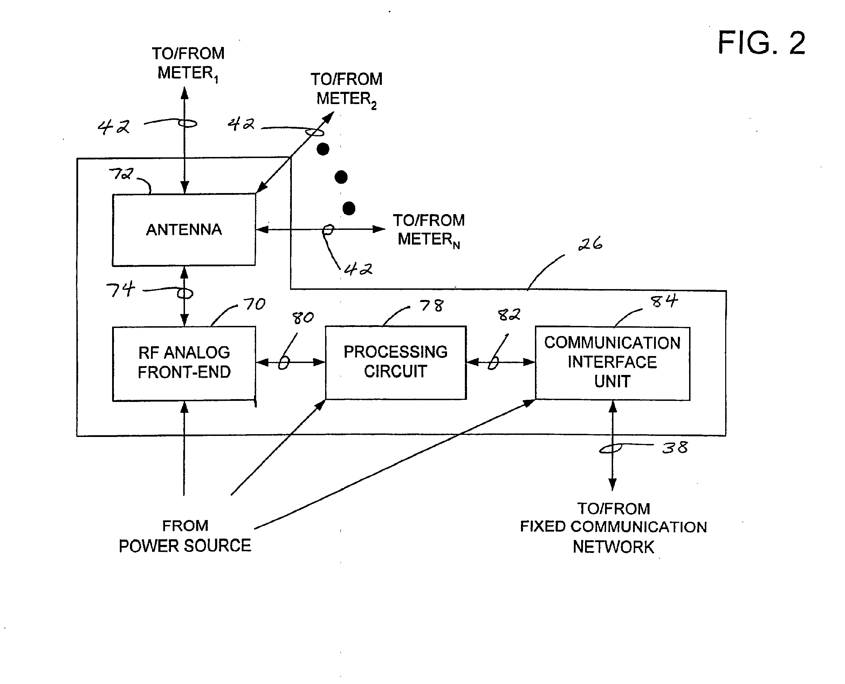

Fig. 2 displays a local communication interface 26 of the plurality of local communication interfaces 26 in accordance with the preferred embodiment of the present invention. Each local communication interface 26 of a cell 40 operates as a short-range, dedicated data collector for receiving instructions from the data collection system 22 via the fixed communication network 24, for transmitting the received instructions to the meter(s) 28 of the cell 40, for receiving and collecting meter data from the meter(s) 28 of the cell 40, and for transmitting the collected meter data to the data collection system 22 through fixed communication network 24. Each local communication interface 26 comprises a radio frequency (RF) front-end 70 and an antenna 72 electrically and communicatively connected to the radio frequency front-end 70 by signal paths 74. Preferably, the radio frequency front-end 70 and antenna 72 form a transmitter and receiver tuned to transmit and receive instructions and data (i.e., to and from meter(s) 28) in the form of wireless electromagnetic signals 76 in the 910 to 920 MHz bandwidth of the electromagnetic frequency spectrum. Each local communication interface 26 also comprises a processing circuit 78 which electrically and communicatively connects, via signal paths 80, to the radio frequency front-end 70. The processing circuit 78 electrically and communicatively connects, through signal paths 82, to a communication interface unit 84 which communicatively connects to fixed communication network 24 via communication channels 38. An exemplary local communication interface 26, acceptable according to the preferred embodiment of the present invention for use where electricity metering and communication devices 46a2 are not employed, includes a transceiver available from Itron, Inc. of Spokane, Washington.

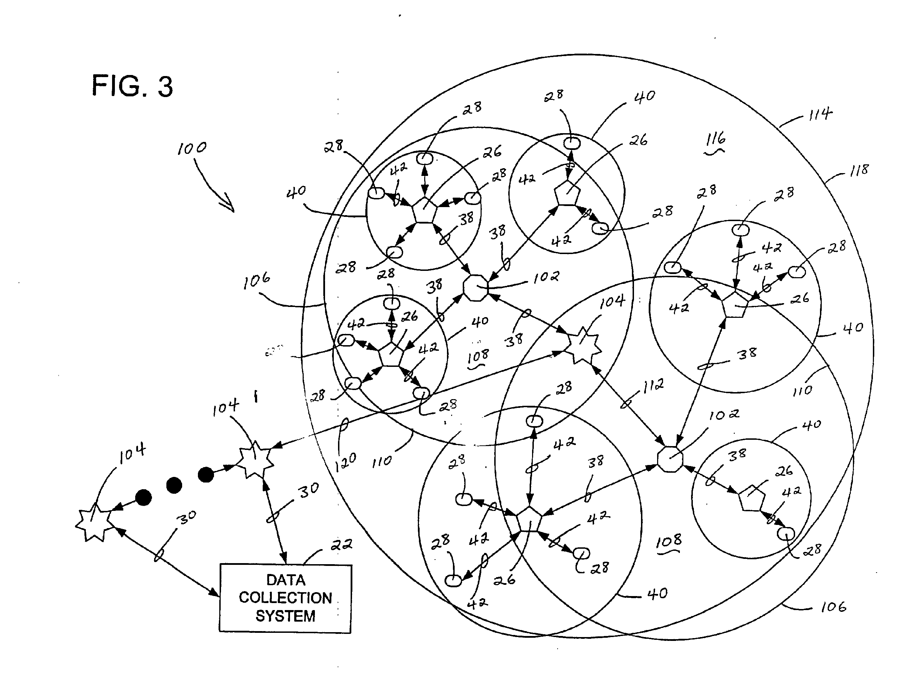

Fig. 3 illustrates a particular logical configuration 100 (also referred to herein as the "configuration 100"), according to the preferred embodiment of the present invention, of a portion of the automatic meter reading system 20. The configuration 100 comprises the data collection system 22, local communication interfaces 26a of the plurality of local communication interfaces 26, meters 28a of the plurality of meters 28, and the first and second pluralities of data concentrators/repeaters 102, 104 of the fixed automatic meter reading network 32 (i.e., note that each data concentrator/repeater 102, 104, preferably, includes a wireless receiver for receiving instructions and/or data, as the case may be, from the data collection system 22, from a local communication interface 26a, or from another data concentrator/repeater 102, 104, and includes a wireless transmitter for transmitting instructions and/or data, as the case may be, to the data collection system 22, to a local communication interface 26a, or to another data concentrator/repeater 102, 104. As displayed in Fig. 3 and as previously described herein, the local communication interfaces 26a and meters 28a are arranged to logically define a plurality of cells 40a (also referred to herein as "nanocells 40a" or "first level cells 40a"). Each nanocell 40a includes, as previously described herein, a local communication interface 26a and one or more meters 28 that communicate with the local communication interface 26a through respective communication channels 42a. The local communication interface 26a of a particular nanocell 40a is dedicated to interrogating and reading the meters 28a only of that nanocell 40a. Preferably, the local communication interface 26a of a nanocell 40a is located only a few feet from the meters 28a of that nanocell 40a, thereby reducing transmission range problems which might occur if the local communication interface 26a and the meters 28 were located farther apart. Hence, the extent of each nanocell 40a is, preferably, only a few feet from the nanocell's local communication interface 26a.

Data concentrators/repeaters 102 of the first plurality of data concentrators/repeaters 102 communicatively connect, as shown in Fig. 3, to local communication interfaces 26a through communication channels 38a and are logically arranged with selected first level cells 40a, in configuration 100, to define a plurality of second level cells 106 (also referred to herein as "microcells 106"). Preferably, each microcell 106 includes a selected plurality of local communication interfaces 26a and a single data concentrator/repeater 102. The data concentrator/repeater 102 of each microcell 106 is dedicated to bi-directionally communicating instructions and data only to and from the local communication interfaces 26a of the nanocells 40a within the microcell 106. To enable such communication, the data concentrator/repeater 102 of each microcell 106 is fixedly positioned at a strategic location selected so that all of the local communication interfaces 26a of a microcell 106 have sufficient transmission power to communicate with the data concentrator/repeater 102 and so that all of the local communication interfaces 26a of the microcell 106 are within the transmission range of the microcell's data concentrator/repeater 102. Preferably, the data concentrator/repeater 102 of a microcell 106 is located within one hundred feet of each local communication interface 26a of nanocells 40a with which the microcell's data concentrator/repeater 102 communicates. Note that, generally, each microcell 106 includes an area 108 surrounding the microcell's data concentrator/repeater 102 in which the microcell's local communication interfaces 26a are located. The extent 110, or boundary, of the area 108 is determined by the transmission range of the wireless transmitter of the microcell's data concentrator/repeater 102 and by the transmission ranges of the transmitters of the radio frequency front-ends 70 of the local communication interfaces 26a of the microcell 106. Note that the transmission ranges of the data concentrators/repeaters 102 of certain microcells 106 may overlap the transmission ranges of the data concentrators/repeaters 102 of other microcells 106, and, hence, the extent 110 of one microcell 106 may overlap the extent 110 of another microcell 106.

Data concentrators/repeaters 102 of the first plurality of data concentrators/repeaters 102 communicatively connect, as depicted in Fig. 3 and via communication channels 112, to respective data concentrators/repeaters 104 of the second plurality of data concentrators/repeaters 104 for the bi-directional communication of instructions and data therebetween. The data concentrators/repeaters 104 are arranged with data concentrators/repeaters 102, in configuration 100, to logically define a plurality of third level cells 114 (also referred to herein as "macrocells 114"). Each macrocell 114, preferably, includes a selected plurality of data concentrators/repeaters 102 and only one data concentrator/repeater 104 which is dedicated to the bi-directional communication of instructions and data with the data concentrators/repeaters 102 of the macrocell 114. To enable such communication, the data concentrator/repeater 104 of each macrocell 114 is fixedly positioned at a strategic location selected so that all of the data concentrators/repeaters 102 of a macrocell 114 have sufficient transmission power to communicate with the data concentrator/repeater 104 and so that all of the data concentrators/repeaters 102 of the macrocell 114 are within the transmission range of the macrocell's data concentrator/repeater 104. Note that, generally, each macrocell 114 includes an area 116 surrounding the macrocell's data concentrator/repeater 104 in which the macrocell's data concentrators/repeaters 102 are located. The extent 118, or boundary, of the area 116 is determined by the transmission range of the wireless transmitter of the macrocell's data concentrator/repeater 104 and by the transmission ranges of the wireless transmitters of the data concentrators/repeaters 102 of the macrocell 114. Note that the transmission ranges of the data concentrators/repeaters 104 of certain macrocells 114 may overlap the transmission ranges of the data concentrators/repeaters 104 of other macrocells 114, and, hence, the extent 118 of one macrocell 114 may overlap the extent 118 of another macrocell 114.

Each macrocell's data concentrator/repeater 104 also communicatively connects, via communication channels 120, to data concentrators/repeaters 104 of other macrocells 114 for the bi-directional communication of instructions and data therebetween. Note that, in Fig. 3, the ellipsis indicates the presence of multiple macrocells 114 and multiple data concentrators/repeaters 104 thereof which are communicatively connected by communication channels 120. At least one or more data concentrator/repeater 104 further communicatively connects, via communication channels 30a, with the data collection system 22 to communicate instructions and data bi-directionally therewith. Therefore, instructions generated by the data collection system 22 and initially transmitted to a first data concentrator/repeater 104 of the fixed automatic meter reading network 32 through a communication channel 30a, are communicable, through a series of receptions and retransmissions by data concentrators/repeaters 102, 104 of network 32, from the data collection system 22 to a particular meter 28a of a particular nanocell 40a. Similarly, meter data collected by a particular meter 28a of a particular nanocell 40a and initially transmitted, via communication channel 42a, by the meter 28a to the meter's local communication interface 26a, is communicable, through a series of receptions and retransmissions by data concentrators/repeaters 102, 104 of network 32, from the meter 28a to the data collection system 22. Communication channels 112, 120, preferably, include wireless communication channels. However, it should be understood that the scope of the present invention includes all other types and forms of communication channels 112, 120 for the communication of information, respectively, between data concentrators/repeaters 102, 104.

Note that while Fig. 3 displays a configuration 100 of macrocells 114, microcells 106, and nanocells 40a in connection with certain backbone elements (i.e., data concentrators/repeaters 102, 104) of the fixed automatic meter reading network 32, it should be understood that the scope of the present invention includes similar configurations of macrocells, microcells, and nanocells in connection with other types or forms of fixed communication networks 24, in whole or in part, and including, but not limited to, the public switched telephone network 34 and the cable television network 36.

Fig. 4 displays a flowchart representation of a method of operation of the automatic meter reading system 20 in accordance with the preferred embodiment of the present invention. After starting at step 150, the method advances to step 152 at which the data collection system 22, operating under computer program control and either automatically or on-request at the demand of a system operator, determines that meter data should be collected from one or more meter(s) 28 of a particular nanocell 40. The data collection system 22 then generates an appropriate instruction to accomplish such meter data collection and communicates that instruction, via the fixed communication network 24 (and appropriate components thereof, including, but not limited to, the first and second pluralities of data concentrators/repeaters 102, 104) and communication channels 30, 38 (and through set top cable television boxes 48 and communication channels 50, as the case may be), to the local communication interface 26 associated with the nanocell 40 and with the meter(s) 28 thereof from which meter data is desired for collection. Upon receipt of the instruction from the data collection system 22, the local communication interface 26, at step 154, formulates an appropriate wake-up instruction for each of the meter(s) 28 from which data is to be collected and communicates the wake-up instruction to the meter(s) 28 via appropriate communication channel(s) 42.

In response to receiving a wake-up instruction, the meter(s) 28, at step 156, exit hibernation mode, retrieve meter data from storage, formulate the meter data into a form suitable for communication to the local communication interface 26 of the meter's nanocell 40, and then communicate the meter data to the nanocell's local communication interface 26 using communication channel(s) 42. After communicating the meter data and after the passage of an preset period of time with no communication activity, the meter(s) 28 re-enter hibernation mode to await receipt of another wake-up instruction. At step 158, the local communication interface 26 receives the meter data communicated by the meter(s) 28 through communication channel(s) 42. Then, at step 160, the local communication interface 26 formulates the meter data into a form suitable for communication to the data collection system 22 and communicates the meter data to the data collection system 22 via the fixed communication network 24 (and appropriate components thereof, including, but not limited to, the first and second pluralities of data concentrators/repeaters 102, 104) and communication channels 30, 38 (and through set top cable television boxes 48 and communication channels 50, as the case may be). After the communication of the meter data to the data collection system 22, the method ends at step 162.

If is understood that the various components of the automatic meter reading system 20 communicate instructions and/or meter data, preferably, in wired or wireless mode as set forth herein. It is also understood that the process of collecting meter data from one or more meters 28 of a particular nanocell 40 is repeatable, in a substantially similar manner, for the other meters 28, if any, of the particular nanocell 40 and for the meters 28 of other nanocells 40. It is additionally understood that the local communication interfaces 26, or the receivers and/or transmitters thereof, may for example and not limitation: be built directly into the meters 28 (i.e., for instance, in the form of one or more integrated circuit chips on a circuit board within the meters 28) and, hence, be considered as part of the meters 28; be in the form of external circuit board(s) that plug into meters 28 and, therefore, be considered either as part of, or not part of, the meters 28; or, be physically separate from the meters 28 and, thus, be considered as being integrated into or a part of the fixed communication network 24 (i.e., including without limitation, being considered to be part of the PSTN, a cable television network, a fixed automatic meter reading network, a CPDP system, cellular communication system, satellite communication system, or other appropriate communication network or system).

Whereas this invention has been described in detail with particular reference to its most preferred embodiment, it is understood that variations and modifications can be effected within the spirit and scope of the invention, as described herein before and as defined in the appended claims. The corresponding structures, materials, acts, and equivalents of all means or step plus function elements, if any, in the claims below are intended to include any structure, material, or acts for performing the functions in combination with other claimed elements as specifically claimed.

## Claims

1. A fixed network meter reading system, comprising:
a plurality of meters for measuring and communicating data related to the consumption of at least one commodity, said meters of said plurality of meters being located at respective endpoint sites and being communicable with a mobile wireless network meter reading system for the communication of information therebetween;
a plurality of communication interfaces for receiving from said plurality of meters data related to the consumption of the at least one commodity, each communication interface of said plurality of communication interfaces being associated and communicable with at least one meter of said plurality of meters and being fixedly located at a position proximate said meter;
a fixed communication network communicable with said communication interfaces of said plurality of communication interfaces; and,
a data collection system communicable with said fixed communication network for receiving from said plurality of communication interfaces the data related to the consumption of the at least one commodity.

2. The fixed network meter reading system of Claim 1, wherein a communication interface of said plurality of communication interfaces is associated and communicable with a group of meters of said plurality of meters, said communication interface being located proximate said meters of the group of meters.

3. The fixed network meter reading system of Claim 2, wherein said communication interface of said plurality of communication interfaces is uniquely associated with a group of meters of said plurality of meters.

4. The fixed network meter reading system of Claim 2, wherein said meters of the group of meters measure data related to the consumption of a single commodity.

5. The fixed network meter reading system of Claim 2, wherein at least two meters of the group of meters measure data related to the consumption of different commodities.

6. The fixed network meter reading system of Claim 1, wherein said fixed communication network includes a communication network wirelessly communicable with communication interfaces of said plurality of communication interfaces.

7. The fixed network meter reading system of Claim 6, wherein said communication network wirelessly communicable with communication interfaces of said plurality of communication interfaces includes a fixed automatic meter reading network.

8. The fixed network meter reading system of Claim 1, wherein said fixed communication network includes a communication network communicable through wired connections with communication interfaces of said plurality of communication interfaces.

9. The fixed network meter reading system of Claim 8, wherein said communication network communicable through wired connections with communication interfaces of said plurality of communication interfaces includes the public switched telephone network.

10. The fixed network meter reading system of Claim 8, wherein said communication network communicable through wired connections with communication interfaces of said plurality of communication interfaces includes a cable television network.

11. The fixed network meter reading system of Claim 1, wherein at least one commodity includes electricity, or natural gas or water.

12. The fixed network meter reading system of Claim 1, wherein a communication interface of said plurality of communication interfaces is wirelessly communicable with at least one meter of said plurality of meters.

13. A network for meter reading, comprising :
a communication network;
a first meter for measuring the consumption of a first commodity and for communicating data related to the measured consumption of the first commodity;
a second meter communicable with said communication network and said first meter for measuring the consumption of a second commodity, for receiving data related to the measured consumption of the first commodity communicated from said first meter, and for communicating to said communication network data related to the measured consumption of the first commodity and data related to the measured consumption of the second commodity.

14. The network of Claim13, wherein said second meter includes a receiver within said second meter for receiving data related to the measured consumption of the first commodity communicated from said first meter.

15. The network of Claim13, wherein said second meter includes a receiver connected to said second meter and communicatively interposed between said first meter and said second meter for receiving data related to the measured consumption of the first commodity communicated from said first meter.

16. A network for meter reading, comprising :
a communication network having a receiver for receiving data related to the consumption of at least one commodity;
a first meter for measuring the consumption of a first commodity and for communicating data related to the measured consumption of the first commodity;
a second meter communicable with said communication network and said first meter for measuring the consumption of a second commodity, for receiving data related to the measured consumption of the first commodity communicated from said first meter, and for communicating to the receiver of said communication network data received from said first meter related to the measured consumption of the first commodity and data related to the measured consumption of the second commodity.
